(19) Europäisches Patentamt
European Patent Office
Office européen des brevets

(11) **EP 2 511 524 A1**

(12) **EUROPÄISCHE PATENTANMELDUNG**

(43) Veröffentlichungstag:
**17.10.2012 Patentblatt 2012/42**

(51) Int Cl.:
***F03D 11/00*** *(2006.01)*

(21) Anmeldenummer: **11003035.0**

(22) Anmeldetag: **11.04.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Baumer Innotec AG**
**8500 Frauenfeld (CH)**

(72) Erfinder:
• **Weigel, Michael**
 **88142 Wasserburg (DE)**
• **Tiedeke, Joachim**
 **8280 Kreuzlingen (CH)**

(74) Vertreter: **Strauss, Steffen**
 **Baumer Innotec AG**
 **Hummelstrasse 17**
 **8500 Frauenfeld (CH)**

(54) **Verfahren und Vorrichtung zum Überwachen eines Rotorblatts für eine Windkraftanlage**

(57) Die Erfindung betrifft ein Verfahren zum Überwachen eines Rotorblatts für eine Windkraftanlage mittels einer Überwachungseinrichtung. Die Überwachungseinrichtung umfasst einen Sensor, zumindest eine von dem Sensor erfassbare, an dem Rotorblatt angeordnete Markierung und eine mit dem Sensor gekoppelte Recheneinrichtung.

Fig. 2

**Beschreibung**

Die Erfindung betrifft ein Verfahren und eine Vorrichtung zum Überwachen eines Rotorblatts für eine Windkraftanlage.

Moderne Windkraftanlagen haben aufgrund zunehmender Leistungsanforderungen erhebliche Ausmaße. Insbesondere die darin verwendeten Rotorblätter weisen entsprechend große Rotorflächen auf. Damit werden die Rotorblätter beträchtlichen Kräften ausgesetzt, beispielsweise Windkräfte oder Fliehkräfte. Einhergehend mit einer Leichtbauweise der Windkraftanfagen kann damit die Schwingungsbereitschaft der Rotorblätter stark zunehmen. Die Hersteller von Windkraftanlagen investieren daher viel Aufwand in die messtechnische Erfassung von Rotorblattverformungen, die während eines Betriebs der Windkraftanlagen auftreten.

Aus der DE 10 2006 002 708 B4 ist eine Messeinrichtung für ein Rotorblatt zur Messung der Durchbiegung des Rotorblatts bekannt. Die Messeinrichtung weist eine Sendeeinheit und mindestens ein am Rotorblatt befestigtes Reflexionsmittel und eine Empfangseinheit auf, wobei die Sendeeinheit Strahlung in Längsrichtung des Rotorblattes aussendet. Die Strahlung ist dabei, ausgehend von der Sendeeinheit, einem Strahlengang folgend, vom mindestens einen Reflexionsmittel zur Empfangseinheit reflektierbar. Bei einer Verformung des Rotorblattes wird der Strahlengang verändert. Hierbei ist mittels der Empfangseinheit die Veränderung des Strahlengangs detektierbar.

Bei hohen Windgeschwindigkeiten kann sich die Auslenkung des Rotorblatts derart erhöhen, dass eine Schädigung oder gar ein Bruch des Rotorblattes auftreten kann.

Der Erfindung liegt die Aufgabe zugrunde ein Auftreten von Schäden an einem Rotorblatt aufgrund von Verformungen des Rotorblatts auf einfache Weise zu erkennen und gegebenenfalls zu verhindern.

Diese Aufgabe wird durch den Gegenstand der unabhängigen Ansprüche gelöst. Vorteilhafte Ausgestaltungen und Weiterbildungen sind in den abhängigen Ansprüchen angegeben. Die Merkmale der Weiterbildungen können, soweit technisch sinnvoll, miteinander kombiniert werden.

Ein Aspekt der Erfindung betrifft ein Verfahren zum Überwachen eines Rotorblatts für eine Windkraftanlage mittels einer Überwachungseinrichtung. Die Überwachungseinrichtung umfasst einen Sensor, der vorzugsweise als eine optoelektronische Kamera ausgebildet sein kann, zumindest eine von dem Sensor erfassbare, an dem Rotorblatt angeordnete Markierung und eine mit dem Sensor gekoppelte Recheneinrichtung.

In einem ersten Schritt des Verfahrens erfasst der Sensor die Markierung zum Messen einer Position der Markierung beim Verformen des Rotorblatts, so dass Positionsdaten der Markierung durch den Sensor bereitgestellt werden. Weiter werden Bewegungsdaten aus den gemessenen Positionsdaten durch die Recheneinrichtung ermittelt, wobei die Bewegungsdaten zeitabhängige Eigenformen, Schwingungen, und/oder eine Zahl von Bewegungszyklen des Rotorblatts (14), sowie mittels einer Spektral-Analyse und / oder Wavelet - Transformation der Schwingungen des Rotorblatts ermittelte Spektralinformationen, insbesondere Eigenfrequenzen und/oder Schwingungsmodi, umfassen.

In einem weiteren Verfahrensschritt werden von der Recheneinrichtung Referenzdaten aus Positionsdaten bereitgestellt, wobei die Referenzdaten mittels einer Simulation oder einer Referenzmessung ermittelt wurden.

In einem weiteren Schritt des erfindungsgemässen Verfahrens wird durch die Recheneinrichtung ein Zustand des Rotorblatts betreffend einen Grad der Materialermüdung, Vereisung, oder Beschädigung des Rotorblatts mittels einer Analyse der Bewegungsdaten umfassend eine regelbasierte Analyse oder einen Vergleich der Bewegungsdaten mit den Referenzdaten, zum Überwachen des Rotorblatts ermittelt oder prognostiziert.

Ein weiterer Aspekt der Erfindung betrifft eine Einrichtung zum Überwachen eines Rotorblatts für eine Windkraftanlage. Die Einrichtung umfasst einen Sensor, zumindest eine von dem Sensor erfassbare, an dem Rotorblatt angeordnete Markierung und eine mit dem Sensor gekoppelte Recheneinrichtung.

Der Sensor ist hierbei ausgebildet, die Markierung zum Messen einer Position der Markierung beim Verformen des Rotorblatts zu erfassen und Positionsdaten der Markierung bereitzustellen. Der Sensor kann vorzugsweise eine optoelektronische Kamera umfassen. Eine Erfassung der Markierung erfolgt vorzugsweise mittels Abbilden auf eine Sensorfläche. Vorzugsweise kann der Sensor in einer Rotomabe oder in der Nähe einer Blattwurzel im Inneren des Rotorblatts angeordnet sein.

Ferner ist die Recheneinrichtung dazu ausgebildet, aus den gemessenen Positionsdaten Bewegungsdaten umfassend zeitabhängige Eigenformen und/oder Schwingungen und/oder Spektralinformationen des Rotorblatts zu ermitteln, Referenzdaten bereitzustellen, und einen Zustand des Rotorblatts betreffend einen Grad der Materialermüdung oder Beschädigung des Rotorblatts mittels einer Analyse der Bewegungsdaten umfassend eine regelbasierte Analyse oder einen Vergleich der Bewegungsdaten mit den Referenzdaten zu ermitteln oder prognostizieren.

Das Verformen des Rotorblatts kann durch Ausübung von Kräften auf das Rotorblatt bewirkt werden. Hierbei ist das Rotorblatt vorzugsweise einseitig an einer Nabe befestigt. Während des Betriebs des Rotorblatts, beim Drehen der Nabe, können Kräfte auf das Rotorblatt als aerodynamische Kräfte, bedingt durch den Luftwiderstand, oder als Zentrifugalkräfte auftreten. Die Kräfte können somit über die Fläche des Rotorblatts, kontinuierlich oder diskret, verteilt sein. Eine durch die Kräfte bedingte Verformung des Rotorblatts kann als Biegung oder Torsion auftreten.

Durch Turbulenzen, ablösende Strömung oder Änderung des Windfeldes kann das Rotorblatt breitbandig angeregt werden. Eine Anregung kann auch über Vibrationen erfolgen, welche von der übrigen Anlage übertragenen werden.

Das Rotorblatt ist vorzugsweise als aerodynamischer Flügel ausgebildet. Die erfindungsgemäße Einrichtung zum Überwachen eines elastisch verformbaren Rotorblatts ist an oder in dem Flügel angeordnet oder untergebracht

Das Rotorblatt kann als ein langgestrecktes, elastisches Objekt angesehen werden. Unter einem langgestreckten Objekt kann ein dreidimensionales Objekt verstanden werden, dessen Länge größer als seine Breite oder Höhe ist, vorzugsweise mehr als 2-mal, oder 10 mal, oder 30 mal größer. Das Objekt kann hohl sein mit einer Materialdicke, die wesentlich kleiner als die Breite des Objekts ist, beispielsweise mehr als 5-mal, oder 20 mal, oder 50 mal kleiner.

Das langgestreckte Objekt kann auch ein horizontal positionierter, einseitig eingespannter Balken sein. Auf den Balken kann mindestens eine Kraft diskret oder punktuell aufgebracht werden. Die Kraft kann beispielsweise eine Gewichtskraft sein, welche durch einen Gegenstand bewirkt wird, der entlang des Balkens verschoben wird.

Zum Ermitteln der Frequenzanteile der Positionsdaten kann eine Spektralanalyse und / oder eine Wavelet-Analyse oder Eigenmode-Analyse der Schwingungen des Rotorblatts verwendet werden

Als Input der Analyse kann die Verformung des Rotorblatts In funktionaler Abhängigkeit von einer Longitudinalkoordinate entlang des Rotorblatts und von der Zeit verwendet werden. Die Analyse kann als Ergebnis eine Spektralfunktion liefern, die von einer Ortsfrequenz und einer Zeitfrequenz abhängt.

Das Überwachen des Rotorblatts kann darin bestehen, dass aus den gemessenen Positionsdaten Informationen darüber gewonnen werden, ob das Rotorblatt intakt ist, oder ob eine Materialermüdung oder gar eine Beschädigung des Rotorblatts infolge einer Krafteinwirkung und/oder einer Anzahl der Belastungszyklen und einer damit verbundenen Materialermüdung des Rotorblatts aufgetreten ist.

Eine Überwachung kann auch darin bestehen, dass Belastungszustände klassifiziert werden. Die Klassen können beispielsweise Kategorien von Windgeschwindigkeiten, Strömungszuständen wie turbulente Strömung oder laminare Strömung, Kategorien von Böen, usw. umfassen. Anhand einer Auswertung mit statistischen Methoden, mit einem Expertensystem, oder einem Schadmodell kann die Lebensdauerbelastung erfasst werden.

Überwachen kann auch darin bestehen, dass aufgrund einer Auswertung der Positionsdaten eine Beschädigung des Rotorblatts prognostiziert wird, so dass Maßnahmen zur Vermeidung der Beschädigung ergriffen werden können, bevor die Beschädigung auftritt.

Beim Betrieb eines Rotorblatts können solche Maßnahmen eine Regelung der Rotorgeschwindigkeit oder eines Pitchwinkels in Abhängigkeit von den Positionsdaten umfassen. Der Pitchwinkels gibt die Verdrehung des Rotorblattes auf der Nabe an.

Die Markierung kann auf einen Punkt der Sensorfläche so abgebildet werden, dass eine laterale Änderung der Position der Markierung eine Änderung der Position des Abbildungspunktes auf der Sensorfläche bewirkt. Als lateral kann eine Richtung verstanden werden, die senkrecht zu einem Verbindungsvektor zwischen Sensor und Markierung steht.

Bei Kenntnis der Entfernung zwischen Sensor und Markierung kann damit eine laterale Verformung des Rotorblatts aus der Änderung der Position des Abbildungspunktes auf der Sensorfläche ermittelt werden.

Mit anderen Worten, eine Änderung der Position des Abbildungspunktes auf der Sensorfläche ist proportional zu dem Winkel zur Flächennormalen der Sensorfläche um den sich die Markierung relativ zum Sensor bewegt.

Eine Positionsänderung der Markierung entlang der optischen Achse des Sensors kann auf Basis einer geometrisch-perspektivischen Betrachtung erfasst werden, mittels eines Verhältnisses zwischen einer Abmessung der Markierung und einer Abmessung ihrer Abbildung auf der Sensorfläche, vor und nach der Positionsänderung der Markierung.

Eine Information betreffend eine Initialentfernung der Markierung kann beispielsweise dadurch an den Sensor übermittelt werden, dass eine Kennzeichnung auf der Markierung aufgebracht wird. Die Kennzeichnung kann die Information als Code umfassen, so dass der Sensor, nach Erfassen und Dekodieren des Codes, die Information und damit die Initialentfernung zwischen Markierung und Sensor erhält.

Die Markierung ist an dem Rotorblatt so angeordnet, dass aus der Position der Markierung unmittelbar die Position des Rotorblatt-Punktes ermittelbar ist, welcher den Ort angibt an dem die Markierung angeordnet ist.

Mit der Erfindung ist es somit in sehr einfacher Weise möglich, Verformungen in allen Raumrichtungen, insbesondere lateral zur Rotorblattachse, zu verfolgen und zu quantifizieren. Voraussetzung hierfür ist, dass die Information über eine Initialposition der Markierung, beispielsweise im Ruhezustand, ohne eine Verformung, vorliegt. Die Entfernung zwischen Sensor und Markierung ändert sich während des Betriebs im Allgemeinen nur unwesentlich.

Der Zustand des Rotorblatts kann vorteilhafterweise durch ein Datenfeld charakterisiert werden. Das Datenfeld kann eine Zustandsgröße umfassen, welche den Grad der Materialermüdung, Eisanlagerung oder Beschädigung des Rotorblatts angibt, der aufgrund von Verformungen erreicht ist. Das Datenfeld kann ferner Informationen über einen örtlichen oder räumlichen Schadensbereich umfassen, welcher den Ortsbereich betrifft in dem eine Ermüdung, Überlastung oder Beschädigung des Rotorblatts aufgetreten oder zu erwarten ist.

Die Ermüdung des Materials kann auch durch die Zahl festgestellter Belastungszyklen und durch die Belastungsamplitude ermittelt werden.

Der Schadensbereich kann durch den Wert einer Longitudinalkoordinate entlang des Rotorblatts oder entlang der Rotorblattoberfläche und/oder den

Wert einer Lateralkoordinate angegeben werden. Die Koordinaten können Geraden oder gekrümmte Kurven sein.

Die Zustandsgröße kann insbesondere eine linguistische Variable sein, beispielsweise "ermüdet", "vereist" oder "beschädigt". Die linguistische Variable kann eine Ausprägung zwischen 0 und 1 aufweisen. Die Ausprägungen der Variablen "beschädigt" können beispielsweise wie folgt interpretiert werden:

- 0 kann heißen, dass keine Beschädigung vorliegt;
- 0,5 kann heißen, dass Merkmale einer bevorstehenden Beschädigung vorliegen, oder dass Merkmale einer eingetreten Beschädigung teilweise vorliegen;
- 1 kann heißen, dass eine Beschädigung vorliegt.

Die Zustandsgröße kann auch eine numerische Größe sein, beispielsweise ein Grad von Übereinstimmung oder der Wert einer Korrelation zwischen einem auf Bewegungsdaten basierenden Muster und einem Referenzmuster.

Durch diese Art, den Zustand zu charakterisieren ist eine Quantifizierung der Zustandsqualität betreffend eine bereits aufgetretene oder zu erwartende Beschädigung des Rotorblatts möglich. Damit kann das Rotorblatt überwacht werden, so dass rechtzeitig Maßnahmen ergriffen werden können, um das Auftreten einer Beschädigung oder die Vergrößerung einer bereits aufgetretenen Beschädigung zu vermeiden.

Die Durchführung der Analyse der Bewegungsdaten kann zum Messzeitpunkt ausgeführt werden, um den Wert des Zustands zum Messzeitpunkt zu ermitteln. Der Zustand kann auch für einen späteren Zeitpunkt ermittelt werden, beispielsweise 1, 10, 30 oder 300 Sekunden nach dem Zeitpunkt der Messung. Eine solche Berechnung, die einer Prognose entspricht, kann von großer Bedeutung für das Überwachen des Rotorblatts sein, da auf dieser Basis rechtzeitig Maßnahmen zum Verhindern der Beschädigung ergriffen werden können.

Die Positionsdaten können vorteilhafterweise an einer Vielzahl aufeinanderfolgender Abtastzeitpunkte gemessen werden. Zu jeweils einem Abtastzeitpunkt können alle Markierungen gleichzeitig abgetastet werden. Die Abtastzeitpunkte können vorzugsweise äquidistant sein.

Die Positionsdaten können mit einem Zeitstempel betreffend den Zeitpunkt ihrer Messung oder Berechnung versehen werden. Damit können die Positionsdaten als Zeitreihen erfasst und verarbeitet werden.

Die Positionsdaten können durch den Sensor kontinuierlich erfasst und in ein analoges, zeitabhängiges Signal umgesetzt werden. Dieses Signal kann, entweder durch den Sensor oder durch die Recheneinrichtung, digitalisiert und beispielsweise in eine Zeitreihe gewandelt werden.

Aus den Positionsdaten können vorteilhafterweise zeitabhängige Eigenformen des Rotorblatts und/oder Schwingungen des Rotorblatts und/oder Spektralinformationen aus Wavelet-Transformationen der Schwingungen des Rotorblatts, insbesondere Eigenfrequenzen, die auch höherer Ordnung sein können, ermittelt werden.

Die Analyse der Bewegungsdaten kann vorteilhafterweise in einer Mustererkennung bestehen, wobei Muster in den Positionsdaten des Rotorblatts erkannt werden. Die Mustererkennung kann als Vergleich der Bewegungsdaten mit den Referenzdaten aufgefasst werden.

Die Mustererkennung kann sich auf Muster in den Eigenformen beziehen. Das sind Verformungsmuster, also Muster im Verlauf der Verformung des Rotorblatts, in Abhängigkeit von der Longitudinalkoordinate. Es kann sich auch um Verformungsmuster in,Abhängigkeit von der Lateralkoordinate handeln.

Zum Erkennen solcher Muster kann ein adaptives System, vorzugsweise ein künstliches neuronalen Netz, oder ein Klassifikator mit starren oder Fuzzy Regeln, oder ein wissensbasiertes System, verwendet werden.

Insbesondere selbstlemende Systeme können verwendet werden, die beispielsweise mittels überwachten Lernens Eigenschwingungen des Rotorblatts derart einordnen können, dass Abweichungen von einem natürlichen Schwingungsverhalten, die auf Materialermüdung oder Materialschäden hinweisen, erkannt werden. Beim Feststellen einer Ähnlichkeit mit Referenzmustern, die mit einem beschädigten Rotorblatt zusammenhängen, kann mit einer bestimmten Wahrscheinlichkeit das Vorliegen einer Beschädigung am Rotorblatt festgestellt werden.

Für die Erkennung der Muster können auch Systeme eingesetzt werden, die mittels unüberwachten Lernens eine Materialermüdung oder Materialschäden erkennen. Solche Systeme können vorteilhafterweise den Lernprozess ohne Referenzdaten durchführen.

Die Mustererkennung kann sich auch auf Muster in den Spektralinformationen des Rotorblatts beziehen, wobei Muster in dem spektralen Amplitudenverlauf und/oder Phasenverlauf erkannt werden. Die Erkennung kann durch einen Vergleich von spektralen Mustern, die aus gemessenen Positionsdaten berechnet sind, mit spektralen Mustern, die aus Referenzdaten berechnet sind, durchgeführt werden.

Für den Vergleich können spezielle Verlaufsformen betrachtet werden, die verstärkt beim Vorliegen einer Beschädigung auftreten. Beim Feststellen einer Ähnlichkeit mit Referenzmustem, die mit beschädigten Rotorblatten zusammenhängen, kann mit einer berechenbaren Wahrscheinlichkeit das Vorliegen einer Beschädigung am Rotorblatt festgestellt werden.

Es kann sich um eine Erkennung von Eigenfrequenzen, insbesondere der Grundfrequenz und Eigenfrequenzen höherer Ordnung, und von Abweichungen der Eigenfrequenzen von den natürlichen Eigenfrequenzen handeln, welche aufgrund einer Beschädigung auftreten. Durch eine solche Analyse ist es möglich, Materialermüdung oder Materialschäden zu erkennen.

Die Analyse kann insbesondere in einer regelbasierten Untersuchung der Positionsdaten des Rotorblatts bestehen. Hierzu kann ein Satz von auf Basis von Expertenwissen erstellten WENN-DANN-SONST - Regeln, sowie eine Inferenzmaschine verwendet werden. Vorteilhafterweise kann damit das Wissen und die Erfahrung von Experten in die Analyse eingebracht werden.

Bei den im Rotorbau verwendeten Materialen kann auf Basis einer Wöhlerkurve, die beispielsweise einen experimentellen Zusammenhang zwischen einer Nennspannungsamplitude und einer ertragbaren Schwingspielzahl herstellt, über die aus gemessenen Auslenkungen ermittelte Anzahl der Belastungszyklen und Materialspannungen, die Materialermüdung abgeschätzt und eine Kennzahl der noch zu erwartenden Lebensdauer abgeleitet werden. Klassen von Belastungszuständen können die Vorhersagegenauigkeit erhöhen.

Die Analyse kann vorteilhafterweise auch in einer regelbasierten Untersuchung der Spektralinformationen des Rotorblatts bestehen. Die für die Untersuchung nötigen Regeln können beispielsweise in einer Prüfung bestehen, ob eine Verschiebung der Eigenfrequenzen vorliegt. In Abhängigkeit von der Höhe der Verschiebung kann eine auf Expertenwissen basierende Aussage gemacht werden, ob eine Beschädigung des Rotorblatts bereits eingetreten ist oder in Zukunft eintreten kann. Die Aussage kann mit der Größe einer Wahrscheinlichkeit für ihre Richtigkeit gekoppelt werden.

Eine Regel zum Ermitteln oder Prognostizieren des Zustands des Rotorblatts kann beispielsweise wie folgt aussehen: WENN die gemessene oder ermittelte Grundfrequenz oder Eigenfrequenz der Grundform der Rotorblattschwingung von einem Erwartungswert der Grundfrequenz um mehr als eine vorgegebene Größe abweicht, DANN liegt ein Schaden vor, SONST liegt kein Schaden vor. Die Regel kann auch als Fuzzy-Regel gestaltet sein, wobei der Erfüllungsrad der WENN-DANN-SONST- Regel als Wahrscheinlichkeit für das Auftreten des Schadens aufgefasst werden kann.

Eine weitere Regel kann beispielsweise wie folgt aussehen: WENN die gemessene oder ermittelte Frequenz der Rotorblattschwingung erster, zweiter oder N-ter Ordnung von einem Erwartungswert der Frequenz der Rotorblattschwingung erster, zweiter oder N-ter Ordnung um mehr als eine vorgegebene Größe abweicht, DANN liegt ein Schaden vor, SONST liegt kein Schaden vor. Analog zu der Regel für die Grundfrequenz kann auch diese Regel als Fuzzy-Regel gestaltet sein.

Die Analyse kann vorteilhafterweise auch in einer Wavelet-Analyse der zeit-und ortsabhängigen Verformung des Rotorblatts entlang der Longitudinalkoordinate des Rotorblatts bestehen.

Gemäß einer Weiterbildung kann der für die Wavelet-Analyse benötigte zeit-und örtliche Verlauf der Verformung entlang der Longitudinalkoordinate des Rotorblatts dadurch ermittelt werden, dass zunächst die Schritte:

a) Aufbringen einer Kraft auf das Rotorblatt an einem Ansatzpunkt,
b) Messen der resultierenden Verformung des Rotorblatts und
c) sukzessives Wiederholen der genannten Schritte für weitere Ansatzpunkte entlang der Longitudinatkoordinate,

ausgeführt oder simuliert werden.

Diese Schritte können ein zeitabhängiges Verformen des Rotorblatts beschreiben, wobei ein Gewicht entlang des waagerecht positionierten, einseitig eingespannten Rotorblatts verschoben und die dadurch bewirkte Verformung des Rotorblatts gemessen oder berechnet wird. Die Gewichtsverschiebung entlang des Rotorblatts und die damit verbundene Verformung, nachfolgend als "Auslenkungsreaktion" bezeichnet, können physisch, das heißt materiell, umgesetzt werden, oder sie können simuliert werden. Das Resultat kann ein gemessener oder simulierter Verlauf der Verformung entlang der Longitudinalkoordinate sein.

Eine physische Ermittlung der Auslenkungsreaktion kann In einer separaten Untersuchung durchgeführt werden, bei welcher die Auslenkungsreaktion bewirkt und der Verlauf der Auslenkungsreaktion aufgezeichnet oder gespeichert wird.

Eine simulierte Ermittlung der Auslenkungsreaktion kann mittels einer Simulation durchgeführt werden, indem die zum Messzeitpunkt aktuellen Positionsdaten in ein Bewegungsmodell als Randbedingung übertragen werden, die Gewichtsverschiebung entlang des Rotorblatts mittels Bewegungsmodell simuliert und die Auslenkungsreaktion berechnet wird.

Der Verlauf der Auslenkungsreaktion kann anschließend einer Wavelet-Transformation unterzogen werden. Aus dem daraus erhaltenen örtlichen Verlauf eines oder mehrerer Wavelet-Koeffizienten kann eine Lokalisierung eines Schadens ermittelt werden. Die Ermittlung kann darauf basieren, dass der Verlauf des Wavelet-Koeffizienten an der beschädigten Stelle einen Peak mit einer spezifischen Form aufweist. Durch Zuführen des Verlaufs des Wavelet-Koeffizienten an eine Mustererkennung oder einen Klassifikator können der Schaden und der Ort seines Auftretens erkannt werden.

Für die Ausführung eines Vergleichs oder einer Mustererkennung werden also Bewegungsdaten und Referenzdaten benötigt. Die Referenzdaten können auf mehrere Arten bereitgestellt werden.

Vorteilhafterweise können die Referenzdaten mittels eines Bewegungsmodells für das Rotorblatt ermittelt werden. Für eine vereinfachte Berechnung des Rotorblatts kann beispielsweise als Bewegungsmodell das Modell eines einseitig eingespannten, schwingenden Balkens verwendet werden. Hierbei kann die Verformung durch eine Differentialgleichung in Abhängigkeit von der Longitudinalkoordinate, der Zeit und den Materialeigenschaften beschrieben werden. Vorteilhaft ist die Verwendung eines Finite-Elemente (FE) Modells für eine dynamische Analyse unter der erwarteten Anregung.

Die Referenzdaten können auch aus einer Datenbasis bereitgestellt werden. Die in der Datenbasis gespeicherten Daten können Positionsdaten oder Verformungen sein, die zuvor durchgeführten Untersuchungen entstammen. Bei diesen Untersuchungen kann das Rotorblatt unter einer Vielzahl von Randbedingungen durch Kräfte belastet werden, wobei die entsprechenden Verformungen des Rotorblatts gemessen und in Form von Referenzdaten gespeichert wurden. Vorteilhafterweise können bei den Untersuchungen extreme Situationen herbeigeführt werden, bei denen das Rotorblatt beschädigt wird.

Gemäß einer Ausführungsform können gemessene Positionsdaten, zu ausgewählten Abtastzeitpunkten oder zu jedem Abtastzeitpunkt, beispielsweise als Randbedingungen einer FE Simulation des Rotorblatts, in das Bewegungsmodell zur Ermittlung der Referenzdaten übertragen werden. Dies entspricht einem Einsatz des Bewegungsmodells unter Echtzeitbedingungen. Damit können zu jedem Abtastzeitpunkt Bewegungsdaten für einen späteren Zeitpunkt des Bewegungsmodells ermittelt werden, wodurch ein Zustand in der Zukunft des Berechnungsmodells ermittelt wird. Damit kann der Zustand des real verwendeten Rotorblatts prognostiziert werden.

Vorteilhafterweise kann als Bewegungsmodell ein Simulationsmodell, beispielsweise ein Finite-Elemente-Modell des Rotorblatts oder ein neuronales Netz, welches Simulationsdaten oder Referenzdaten gelernt hat, verwendet werden. Der Vorteil des Simulationsmodells besteht in einer großen Realitätsnähe und damit in einer hohen Zuverlässigkeit der Erkennung oder Prognose des Auftretens einer Beschädigung.

Vorteilhafterweise können die Positionsdaten, vorzugsweise mittels eines adaptiven Filters, zur Beseitigung von Störsignalen und/oder Rauschen gefiltert werden. Die Filterung kann auch auf die Referenzdaten angewendet werden, die zuvor durchgeführten Untersuchungen entstammen, bevor die Referenzdaten in der Datenbasis gespeichert werden.

Gemäß einer Weiterbildung kann der für die Erfassung einer Markierung eingesetzte Sensor vorzugsweise eine optoelektrische Kamera und eine Bildverarbeitungseinrichtung umfassen, welche dazu ausgebildet ist, eine Position der Markierung mittels Bilderkennung zu ermitteln. Insbesondere kann eine laterale oder longitudinale Positionsänderung der Markierung mittels der Bilderkennung erfasst werden.

Vorzugsweise kann eine relative Positionsänderung erfasst werden, wobei durch Einbeziehung einer absoluten Position. beispielsweise einer Initialentfernung zwischen Markierung und Sensor, auch eine absolute Positionsänderung ermittelt werden kann. Die Initialentfernung zwischen Markierung und Sensor kann mittels eines auf der Markierung sichtbaren Codes, welcher die Initialentfernung in codierter Form darstellt, ermittelt werden.

Vorteilhafterweise kann der Sensor als Matrix-Sensor, insbesondere als CCD-Sensor, ausgebildet sein.

Die Einrichtung kann vorteilhafterweise eine Vielzahl von Sensoren, beispielsweise mehr als 2, oder 5, oder 10, oder 20, oder 50 Sensoren umfassen, die zueinander beabstandet an dem Rotorblatt angeordnet sind. Der Vorteil einer Anordnung mit mehreren Sensoren besteht darin, dass damit auch große Verformungen gemessen werden können. Bei Verwendung eines einzigen Sensors könnte die Markierung bei großen Verformungen aus dem Abbildungsbereich des Sensors herausfallen, beispielsweise weil der optische Weg zwischen Markierung und Sensor unterbrochen wird. Vorzugsweise wird an der oberen und unteren Seite des Rotorblatts mindestens ein Sensor angeordnet, wobei die Angaben "oben" und "unten" auf die Verformungsrichtungen beim Biegen des Rotorblatts bezogen sind.

Vorteilhafterweise kann der Sensor an einer von den Positionen der Markierungen longitudinal beabstandete Position angeordnet sein. Das heißt, dass die Longitudinalkoordinate der Sensorposition mit keiner der Longitudinalkoordinaten der Markierungspositionen übereinstimmt. Damit können alle Markierungen auf den Sensor abgebildet werden.

Vorteilhafterweise kann der Sensor dazu ausgebildet sein, eine Biegung und/oder eine Torsion des Rotorblatts zu erfassen.

Gemäß einer Ausführungsform kann die erfindungsgemäße Einrichtung mindestens eine Lichtquelle zum Beleuchten der Markierung umfassen. Eine Verwendung einer Lichtquelle als Ersatz der Markierung kann dann sinnvoll sein, wenn eine Beeinträchtigung der Wirksamkeit der Reflektoren durch Verschmutzung oder Vereisung zu erwarten ist.

Vorteilhafterweise kann die Markierung optische und/oder IR Reflexionsmittel umfassen. Beim Anleuchten mit Licht kann der Sensor die Markierung erfassen indem ein Teil des Lichts der Lichtquelle durch die Markierung an den Sensor zurück reflektiert oder zurückgestreut wird.

Die Markierung kann vorzugsweise als ein Reflektor mit ebener oder gekrümmter Reflexionsfläche ausgebildet sein.

Die Markierung kann auch als ein Retroreflektor, beispielsweise ein Tripelprisma, Tripelspiegel, Tripelprismenarray oder Tripelspiegelarray mit drei zueinander rechtwinklig angeordneten Reflexionsflächen ausgebildet sein. Der Retroreflektor kann in einer Anordnung mit einer Lichtquelle verwendet werden, wobei die Lichtquelle im Bereich oder direkt am Ort eines Sensors angeordnet sein kann, eine kegelförmige Abstrahlungscharakteristik aufweisen kann, und auf die Markierung ausgerichtet sein kann. Eine solche Anordnung hat den Vorteil, dass die Markierung, weitgehend unabhängig von der Größe der Verformung, mit gleicher Leuchtstärke auf den Sensor abgebildet wird, wodurch eine hohe Qualität der Messergebnisse erzielbar ist.

Vorzugsweise kann die Markierung mindestens ein optisches Leuchtmittel und/oder mindestens ein IR Leuchtmittel umfassen, beispielsweise eine Leuchtdiode, welches Licht in Richtung des Sensors abstrahlt, so dass der Sensor die Markierung erfassen kann. Vorteilhafterweise kann damit die Markierung, weitgehend unabhängig von der Größe der Verformung, mit gleicher Leuchtstärke auf den Sensor abgebildet werden. Dadurch ist ebenfalls eine hohe Qualität der Messergebnisse erzielbar.

Vorzugsweise kann an dem Rotorblatt eine Vielzahl von Markierungen angeordnet sein, beispielsweise zumindest zwei, oder fünf, oder zehn, oder zwanzig oder hundert Markierungen. Die Markierungen können an der gesamten Oberfläche des Rotorblatts angeordnet sein, wodurch vorteilhafterweise die Verformung des gesamten Rotors erfassbar ist.

Vorzugsweise können die Markierungen entlang einer Longitudinalkoordinate des Rotorblatts an Positionen mit jeweils einem Longitudinalabstand zu einem Nullpunkt der Longitudinalkoordinate angeordnet sein. Zu jedem Longitudinalabstand können eine oder mehrere Markierungen nebeneinander. an Positionen entlang einer Lateralkoordinate mit jeweils einem Lateralabstand zu einem Nullpunkt der Lateralkoordinate, angeordnet sein.

Für eine adäquate Verarbeitung der erfassten Positionsdaten durch die Recheneinrichtung können die den Markierungen entsprechenden Punkte an dem Rotorblatt, vorzugsweise an der Oberfläche des Rotorblatts, als Stützwerte für eine Volumen- oder Oberflächenapproximation des Rotorblatts in einem 3D-Modell dienen, so die Auslenkung eines jeden Punktes, vorzugsweise an der Oberfläche des Rotorblatts, ermittelbar ist.

Die Markierungen sowie die Sensoren können vorzugsweise innerhalb eines Hohlraumes des Rotorblatts, beispielsweise an einer Innenfläche des Hohlraums, angeordnet sein. Diese Anordnung ist vorteilhafterweise sehr beständig gegen äußere Witterungseinflüsse.

Gemäß einer Ausführungsform kann die Markierung einen Code umfassen, in welchem eine eindeutige Kennzeichnung der Markierung, zum Ermitteln einer Position der Markierung, codiert ist. Die Recheneinrichtung kann dazu eingerichtet sein, den Code zu decodieren und damit die Kennzeichnung zu ermitteln.

Vorzugsweise kann in der Recheneinrichtung eine Zuordnungstabelle von Koordinaten, vorzugsweise dreidimensionalen Koordinaten, zu Kennzeichnungen abgelegt sein. Dadurch wird ermöglicht, dass der Markierung die dreidimensionalen Koordinaten und die damit gekoppelte Initialposition zugeordnet werden.

Ein weiterer Aspekt der Erfindung betrifft eine Regeleinrichtung, welche dazu ausgebildet ist, das erfindungsgemäße Verfahren zum Überwachen eines Rotorblatts auszuführen. Die Regeleinrichtung umfasst eine Stelleinrichtung mit zumindest einem Stellglied, mit welcher in Abhängigkeit vom Wert der Zustandsgröße, der elastischen Verformung entgegengewirkt wird. Dazu kann das Stellglied beispielsweise Schwingungen erzeugen und auf das Rotorblatt übertragen, welche mit den Schwingungen aufgrund äußerer Kräfte überlagert werden, um dadurch eine Gesamtschwingung des Rotorblatts zu minimieren. Vorzugsweise kann der Rotor der Windkraftanlage mittels der erfindungsgemäßen Regeleinrichtung geregelt werden. Hierzu kann die Stelleinrichtung der Regeleinrichtung ein Stellglied zur Einstellung eines Anstellwinkels des Rotorblatts umfassen.

Durch die Auswertung der spektralen Information der aufgezeichneten Bewegungsdaten sind sehr genaue Überprüfungen des Zustands des Rotorblatts möglich, da sich Frequenzen sehr exakt messen lassen. Tatsächlich stellen Frequenzen die am genauesten messbaren Größen überhaupt dar. Damit geht aber auch einher, dass Veränderungen, die nicht mit problematischen Zuständen des Rotorblatts zusammenhängen, die charakteristischen Frequenzen verändern können. Wünschenswert wäre es demgemäß, wenn Veränderungen, die aufgrund von problematischen Zustandsänderungen auftreten, wie etwa eine Materialermüdung, sich von anderen Zustandsänderungen, die unkritisch sind, unterscheiden ließen. Mit einer solchen Diskriminierbarkeit würde sich auch, da das Messverfahren an sich sehr genau ist, die Genauigkeit in der Feststellung von Zuständen, wie Materialermüdungen oder Brüchen deutlich steigern lassen. In überraschend einfacher Weise ist dies durch die Messung der Temperatur des Rotorblatts als zusätzlichem Parameter möglich. Da die Temperatur des Materials des Rotorblatts im Allgemeinen das Elastizitätsmodul beeinflusst, ändern sich auch die Resonanzfrequenzen des Rotorblatts. Demgemäß ist in Weiterbildung der Erfindung vorgesehen, mittels einer Temperaturmesseinrichtung die Temperatur des Rotorblatts zu ermitteln. Von der Recheneinrichtung werden dann die Spektralinformation oder die Referenzdaten in Abhängigkeit von der gemessenen Temperatur anhand einer Kennlinie verändert. Der Vergleich der Bewegungsdaten mit den Referenzdaten durch die Recheneinrichtung erfolgt dann mit den veränderten Daten.

Entsprechend weist die Einrichtung zum Überwachen eines Rotorblatts für eine Windkraftanlage dazu eine an die Recheneinrichtung angeschlossene Temperaturmesseinrichtung auf, mittels welcher die Temperatur des Rotorblatts ermittelbar ist, wobei die Recheneinrichtung eingerichtet ist, die Spektralinformation oder die Referenzdaten in Abhängigkeit von der gemessenen Temperatur anhand einer Kennlinie zu verändern und den Vergleich der Bewegungsdaten mit den Referenzdaten anhand der veränderten Daten durchzuführen.

Die Erfindung wird nachfolgend anhand von Ausführungsbeispielen und unter Bezugnahme auf die Zeichnungen naher erläutert. Dabei verweisen gleiche Bezugszeichen auf gleiche oder entsprechende Elemente. Die Merkmale verschiedener Ausführungsbeispiele können miteinander kombiniert werden.

Es zeigen:

Fig. 1 a    eine Windkraftanlage mit einer erfindungsgemässen Einrichtung zum Überwachen eines Rotorblatts mit Sensor in der Rotornabe,

Fig. 1b    eine Windkraftanlage mit einer erfindungsgemässen Einrichtung zum Überwachen eines Rotorblatts mit Sensor im Rotorblatt,

Fig. 2    eine erfindungsgemässe Einrichtung zum Überwachen eines Rotorblatts,

Fig. 3    eine Abbildungen von Markierungen auf eine Sensorfläche,

Fig. 4    die Abbildung einer Markierung auf die Sensorfläche vor und nach einer Verformung des Rotorblatts,

Fig. 5    eine Anordnung von Markierungen an einem einseitig eingespannten Balken,

Fig. 6    Schwingungsformen des einseitig eingespannten Balkens,

Fig. 7    einen einseitig eingespannten Balken mit einer Eisanlagerung an der Stelle x0,

Fig. 8    einen einseitig eingespannten Balken mit einer Beschädigung an der Stelle x0,

Fig. 9    Frequenzspektren von Schwingungen eines Rotorblatts mit und ohne Beschädigung,

Fig. 10a    einen Verlauf einer Auslenkungsreaktion entlang der Longitudinalkoordinate eines einseitig eingespannten Balkens,

Fig. 10b    einen Verlauf von Wavelet-Koeffizienten, die mittels einer Wavelet-Analyse der Auslenkungsreaktion erhalten wurden,

Fig. 11a    einen Verlauf einer Verformung entlang der Longitudinalkoordinate des einseitig eingespannten Balkens,

Fig. 11b b    einen Verlauf der Differenzen der Messstellen des einseitig eingespannten Balkens,

Fig. 12a    einen Verlauf einer Verformung entlang der Longitudinalkoordinate des einseitig eingespannten Balkens und Biegeradius ohne Beschädigung,

Fig.12b    einen Verlauf einer Verformung entlang der Longitudinalkoordinate des einseitig eingespannten Balkens und Biegeradius mit Beschädigung und

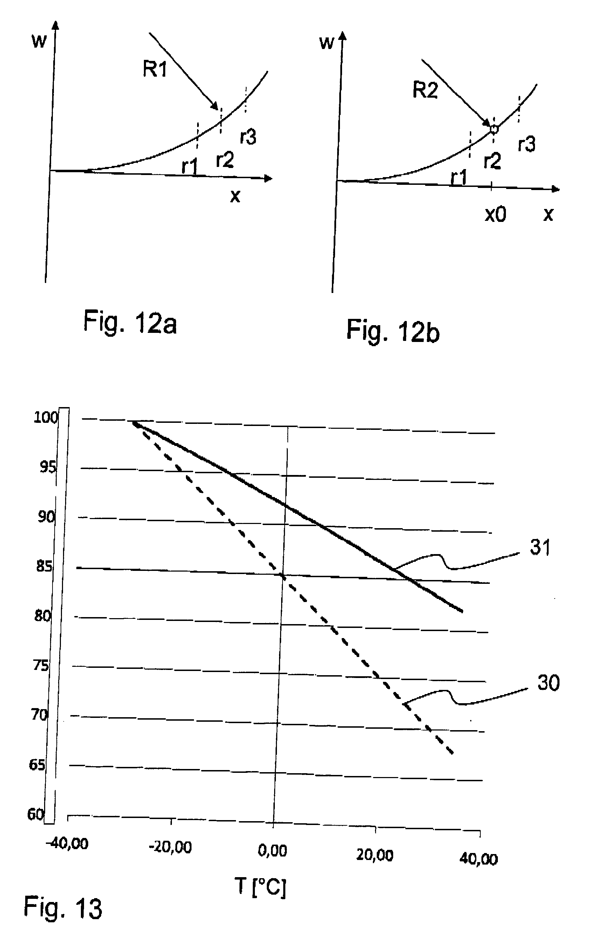

Fig. 12b    schematisch einen Verlauf des Elastizitätsmoduls und den Verlauf einer Resonanzfrequenz einer mechanischen Schwingung eines Rotorblatts als Funktion der Temperatur.

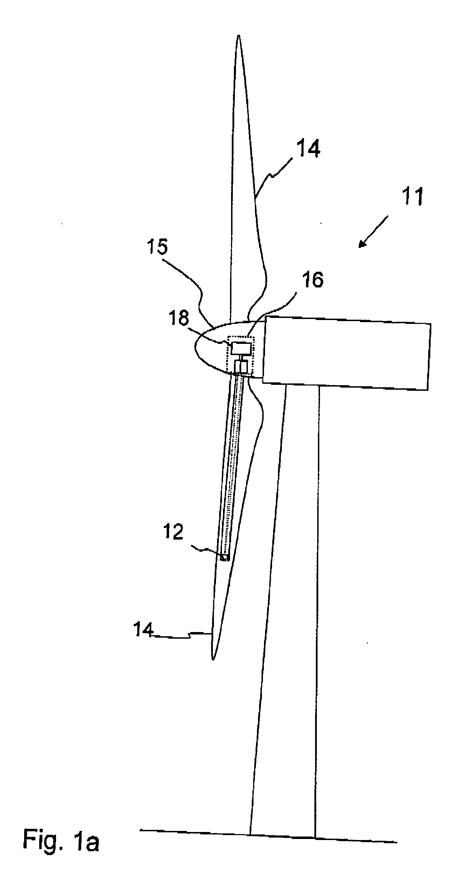

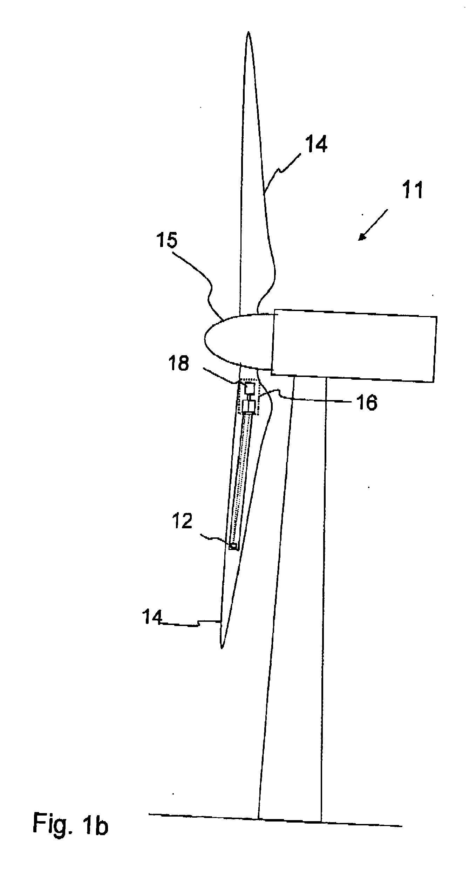

Fig. 1 a und Fig. 1b zeigen eine Windkraftanlage 11 mit einer erfindungsgemässen Einrichtung zum Überwachen eines Rotorblatts 14 mit einem Sensor 16, wobei der Sensor 16 in Fig. 1a in einer Rotornabe 15 und in der Fig. 1b in einem Rotorblatt 14 angeordnet ist.

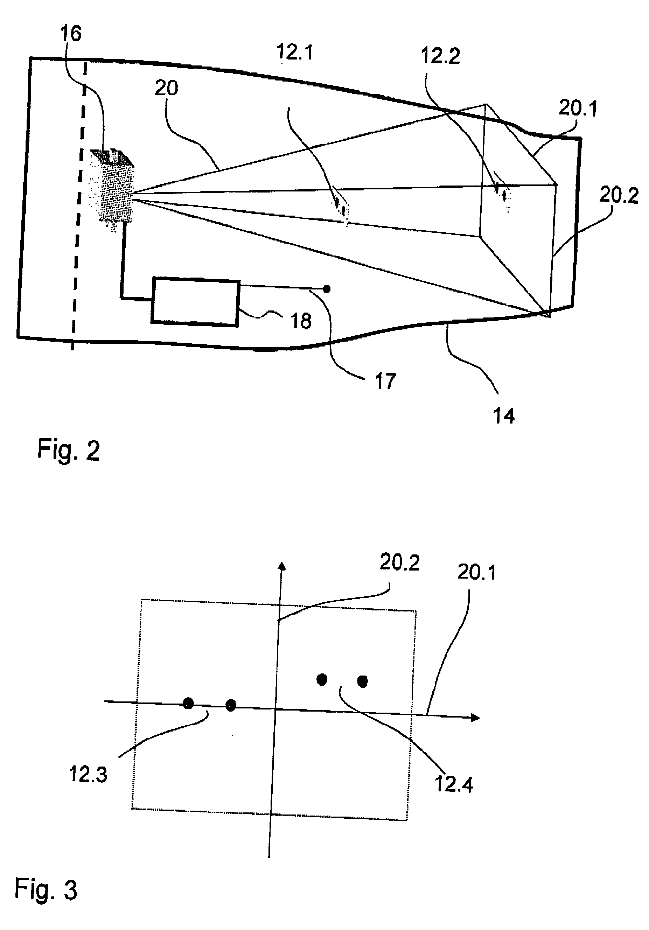

In Fig. 2 ist eine erfindungsgemäße Einrichtung zum Überwachen des Rotorblatts 14 für die Windkraftanlage 11 dargestellt. Die Einrichtung umfasst den Sensor 16, zwei von dem Sensor 16 erfassbare, an dem Rotorblatt 14 angeordnete Markierungen 12.1, 12.2 und eine mit dem Sensor 16 gekoppelte Recheneinrichtung 18. Der Sensor 16 ist vorzugsweise als eine optoelektronische Kamera 16.1 ausgeführt.

Der Sensor 16 ist dazu ausgebildet, die Markierungen 12.1, 12.2 mittels Abbilden auf eine Sensorfläche 16.3 (darstellt in Fig. 3) zu erfassen. Damit wird eine Position der Markierungen 12.1, 12.2 beim Verformen des Rotorblatts 14 gemessen und Positionsdaten der Markierungen 12.1, 12.2 bereitgestellt. Dazu werden die Markierungen 12.1, 12.2 innerhalb eines Blickwinkels 20 des Sensors 16 angeordnet. Der Blickwinkel 20 wird hierbei durch ein Feld 20.1 in Schlagrichtung des Rotorblatts und ein Feld 20.2 in Schwenkrichtung des Rotorblatts aufgespannt.

Die Recheneinrichtung 18 ist dazu ausgebildet, aus den gemessenen Positionsdaten Bewegungsdaten zu ermitteln. Die Bewegungsdaten umfassen zeitabhängige Eigenformen und/oder Schwingungen und/oder Spektralinformationen des Rotorblatts 14.

Die Recheneinrichtung 18 ist ferner dazu ausgebildet, Referenzdaten bereitzustellen und einen Zustand des Rotorblatts 14 mittels einer Analyse der Bewegungsdaten zu ermitteln oder prognostizieren. Der Zustand betrifft einen Grad der Materialermüdung oder Beschädigung des Rotorblatts 14. Die Analyse der Bewegungsdaten umfasst eine regelbasierte Analyse oder einen Vergleich der Bewegungsdaten mit den Referenzdaten.

Der Abstand des Ortes von einem Referenzzustand auf der als CCD ausgebildeten Sensorfläche 16.3 ist proportional zu den Winkeln zur optischen Achse unter dem sich die als Retroreflektoren ausgebildeten Markierungen 12.1, 12.2 relativ zum Sensor 16 befinden.

Mit der erfindungsgemässen Einrichtung können in vorteilhafter Weise Schäden und/oder Eisanlagerungen an einem Rotorblatt 14 erkannt werden. Es ist bekannt, dass Schäden und Eisanlagerungen zu einer Änderung der natürlichen Frequenz des Rotorblattes führen. Insbesondere im Bereich von über 30 Hz sind signifikante Verschiebungen im Freqenzspektrum des Rotorblatts 14 zu erwarten.

Durch die schnelle Messung der Durchbiegung in verschiedenen Distanzen und eine Frequenzanalyse der Daten hinsichtlich einer lateraler Verschiebung und einer Torsion (Verwendung von einem Reflektorpaar in jeder Distanz) mit einer CCD lassen sich die Daten so auswerten, dass Beschädigungen und Eisanlagerungen erkennbar werden.

An die Recheneinrichtung 18 ist weiterhin eine Temperaturmesseinrichtung 17 angeschlossen, mit welcher der Recheneinrichtung 18 Messwerte der Temperatur zugeführt werden. Anhand dieser Messwerte können dann die Referenzdaten oder die aus den Bewegungsdaten ermittelte Spektralinformation angepasst werden. Mit der Anpassung werden temperaturabhängige Änderungen der elastischen Konstanten berücksichtigt und korrigiert. Entweder werden dazu die Referenzdaten an die aus den Bewegungsdaten ermittelte Spektralinformation, beziehungsweise das gemessene Frequenzspektrum angepasst, oder umgekehrt das gemessene Frequenzspektrum anhand der gespeicherten Temperaturkennlinie angepasst, so dass sich diese geänderten Daten auf die für die Referenzdaten gültige Temperatur beziehen.

In der Fig. 3 sind die Abbildungen 12.3, 12.4 des ersten und zweiten Markierungspaares 12.1, 12.2 auf die Sensorfläche 16.3 dargestellt. Die Abbildungen 12.3 und 12.4 der Markierungen 12.1, 12.2 sind voneinander lateral beabstandet und weisen eine ermittelbare Fläche auf. Auf Basis der Positionen und der Fläche der Abbildungen 12.3, 12.4 ist es möglich, die relative Bewegung der Markierungen 12.1, 12.2 entlang und lateral zur Longitudinalkoordinate des Rotorblatts 14 zu ermitteln. Die absolute Größe der Bewegung der Markierungen 12.1, 12.2 sind in Kenntnis ihrer Initialpositionen ebenfalls ermittelbar.

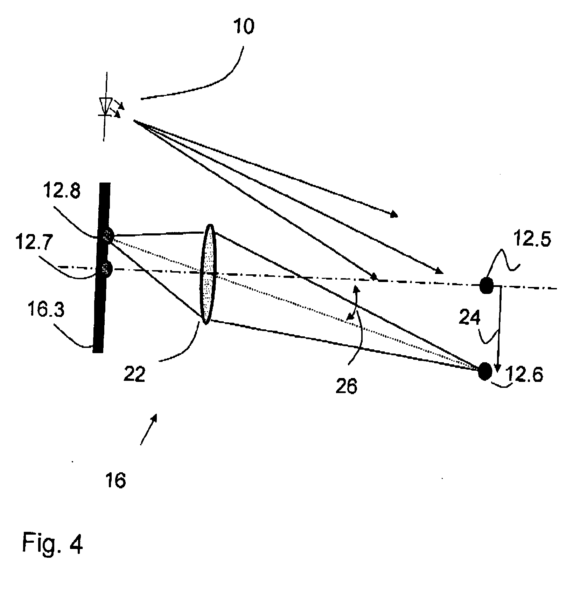

Die Fig. 4 zeigt die Abbildung der Markierungen 12.1 und 12.2 auf die Sensorfläche 16.3 vor und nach einer Verformung des Rotorblatts 14. In dieser Ausführungsform wird eine Lichtquelle 10 verwendet. Die Lichtquelle 10 kann dabei als LED ausgeführt sein.

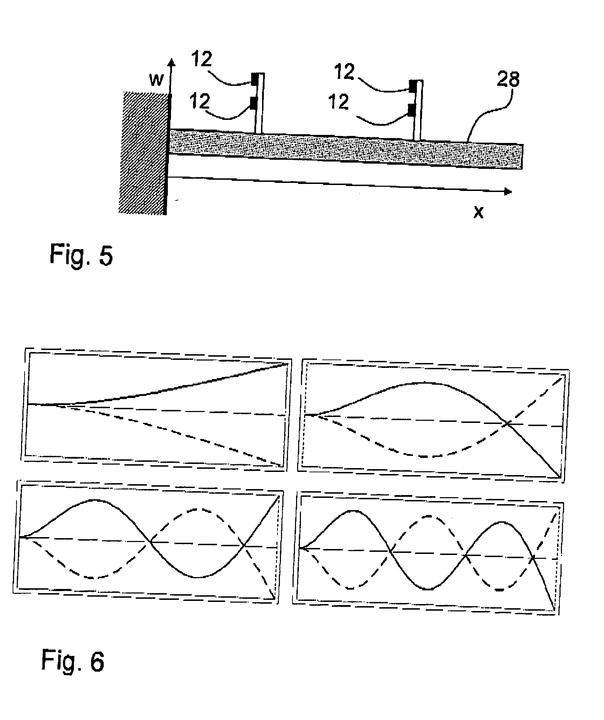

Die Fig. 5 zeigt eine Anordnung von Markierungen auf einem einseitig eingespannten Balken 28.

Der Einfachheit halber und zur Demonstration des Sachverhalts kann wie In Fig. 5 dargestellt, ein eingespannter schwingender Balken 28 als Bewegungsmodell für das Rotorblatt 14 verwendet werden. Hierbei kann die Verformung durch eine Differentialgleichung oder ein FE Modell in Abhängigkeit von der Longitudinalkoordinate, der Zeit und den Materialeigenschaften beschrieben werden.

Zur Ermittlung von Referenzdaten wird jedoch bevorzugt ein FE Modell des Rotorblatts 14 und/oder Messungen in einer Lernphase auf der Windkraftanlage 11 verwendet.

Die Bewegungsgleichung bezogen auf den in Fig. 5 dargestellten Balken 28 ist nachstehend aufgeführt:

$$A \rho \, W^{(0,2)}(x,t) + W^{(4,0)}(x,t) = 0$$
$$EM \, J$$

Diese Bewegungsgleichung kann zur Ermittlung von Bewegungsdaten eines unbeschädigten Balkens 28 und zur vereinfachten Darstellung der zu erwartenden Schwingungsformen dienen.

Die Größen in dieser Gleichung haben folgende Bedeutungen:

t    Zeit [sec]
x    Ort [m]
EM   Elastizitätsmodul [N/m^2]
A    Querschnitt des Balkens [m^2]
J    Trägheitsmoment [kg m^2]
p    Spezifisches Gewicht [kg / m^3]
w    Verformung zur Zeit t, am Ort x [m]

Durch Einsetzen von Anfangswerten und Randbedingungen für die beschriebene Situation können Eigenfrequenzen und Eigenformen ermittelt werden.

Die Fig. 6 zeigt die, mit Hilfe der vorstehend aufgeführten Bewegungsgleichung ermittelten, ersten vier Schwingungsformen des einseitig eingespannten Balkens 28. Diese Schwingungsformen korrespondieren näherungsweise mit den Eigenformen eines Rotorblatts 14. Die nachfolgenden Betrachtungen basieren auf diesem einfachen Modell.

Die Eigenfrequenzen können ebenfalls aus dieser Bewegungsgleichung ermittelt werden. An den Messpunkten der Verformungen (der Ort der Markierungen 12) kann. nun mit hoher zeitlicher Auflösung die Verformung (lateral und Torsion) gemessen werden. Mit lateral ist hier die Ebene senkrecht zur Longitudinalachse x gemeint.

Wird jetzt durch homogene, lokale begrenzte oder auch verteilte Eisanlagerung der Massebelag auf einem Rotorblatt 14 verändert, verändert sich die Eigenfrequenzen und die Eigenformen. In der Praxis wird häufig mit einem von Null linear zum Rand anwachsenden Belag gerechnet.

Ein ähnliches Verhalten ist bei einer Beschädigung zu erwarten. Wird an einer Stelle der Balken 28 geschwächt, dann verändern sich die Eigenformen und die Eigenfrequenzen des Systems.

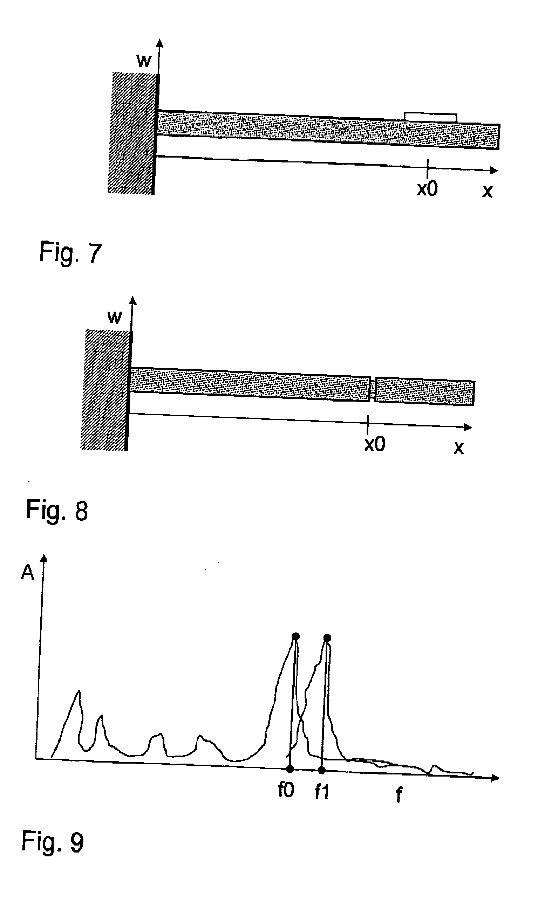

In der Fig. 7 ist der einseitig eingespannten Balken 28 mit einer simulierten Eisanlagerung an der Stelle x0 und in der Fig. 8 ist der einseitig eingespannten Balken 28 mit einer Beschädigung an der Stelle x0 darstellt.

Zum Erkennen der Eisanlagerung oder des Schadens wird das mittels einer Spektralanalyse oder einer Wavelet-Transformation errechnete Frequenzspektrum von lateraler Auslenkung (y und z) und der Torsion untersucht. Beim Vorliegen einer Verschiebung der Eigenfrequenzen der Grundform oder höherer Ordnungen kann mit hoher Wahrscheinlichkeit auf einen Schaden geschlossen werden. Die höheren Ordnungen sind deshalb von Interesse, da sie relativ weit weg vom Störspektrum der Windkraftanlage 11 sind und so eine bessere Aussage erlauben und weil sie in der Literatur als besonders aussagekräftig dargestellt sind.

Die Fig. 9 zeigt Frequenzspektren von Schwingungen des Rotorblatts 14 mit und ohne Beschädigung. Diese sind als Beispiele für eine Auswertung des lateralen Verformungsspektrums (y oder z, bzw. edge- oder flap-wise) aufgrund von Eisanlagerungen oder einer Beschädigung aufzufassen.

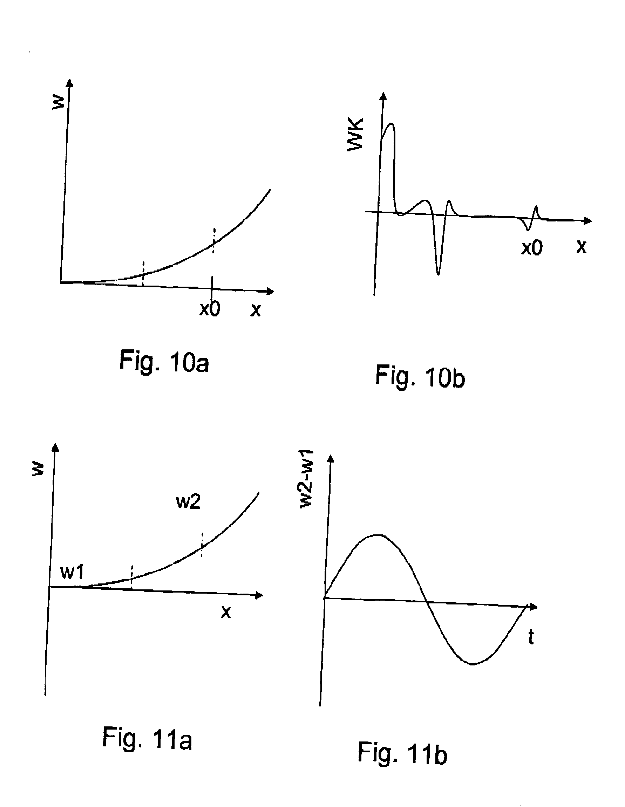

Eine weitere Analysemöglichkeit besteht in der Ermittlung der Auslenkungsreaktion (deflection response) an mehreren Punkten. Die Fig. 10a zeigt einen Verlauf der Auslenkungsreaktion entlang der Longitudinalkoordinate eines einseitig eingespannten Balkens 28.

Ein solches statisches Auslenkungsprofil wird als Eingangsgröße für eine Wavelet-Analyse (symlet) verwendet. Die Fig. 10b zeigt einen Verlauf der

Wavelet-Koeffizienten, die mittels einer Wavelet-Analyse der Auslenkungsreaktion erhalten wurden. Grundsätzlich ist eine Wavelet Analyse sehr vorteilhaft. Eine Wavelet-Transformation ist eine Weiterbildung der Short-Time-Fourier-Transformation (SFTF), welche hier eine lokale Analyse von Signalen sowohl im Ortsbereiches (bei einer Kombination mehrerer Messstellen), als auch Zeitbereich ermöglicht.

Eine Vielzahl von Ausführungsvarianten der Strukturanalyse mit Wavelet-Transformationen ist möglich, wobei hier nur einige Ansätze exemplarisch dargestellt werden. Es ist beispielsweise möglich, dass durch die Variation In der Auslenkung an einigen Punkten im Vergleich zu ihren Nachbarn Peaks in den Wavelet-Koeffizienten (WC) erkannt werden können, wie beispielsweise an der Stelle x0. Diese Peaks repräsentieren Beschädigungen entlang des Profils. Diese Technik ermöglicht eine Lokalisierung und Quantifizierung des Schadens. Ein weiterer Ansatz besteht in der Verwendung einer linearen Kombination von Waveletfunktionen oder Wavelet Paket Transformation (WPT). Hierbei werden Kombinationen von stationären und nicht-stationären Charakteristiken zur Auswertung herangezogen. In einer Ausführungsform werden anhand einer WPT die Komponente Energie ermittelt und beispielsweise in einem neuronalen Netzwerk weiterverarbeitet. In einer weiteren Ausführungsform werden anhand einer WPT der "WPT Energy Rate Index" ermittelt und beispielsweise mit Methoden der Statistischen Prozesskontrolle (SPC) bewertet.

Der allgemeine Ablauf ist in diesen Fällen:

- eine Wavelet Paket Dekomposition,
- eine Berechnung der "Wavelet Packet Energy Rate Index" und/oder "Wavelet Packet Componenent Energy" und
- eine Identifikation der Schadstelle durch Eingabe der Komponenten in ein neuronales Netzwerk bzw. Verarbeitung und Bewertung anhand von Schwellwerten mit Methoden der statistischen Prozesskontrolle.

Eine weitere Analysemöglichkeit besteht darin, die Verformungen an bestimmten Stellen (beispielsweise Knotenpunkten und/oder Maxima der Eigenformen) zu analysieren. Hierzu zeigt die Fig. 11a einen Verlauf einer Verformung entlang der Longitudinalkoordinate des einseitig eingespannten Balkens 28. Die Fig. 11b zeigt einen ermittelten Verlauf der Eigenschwingung entlang der Longitudinalkoordinate des einseitig eingespannten Balkens 28. Diese Analyse kann durch die Verwendung von adaptiven Filtern im Zeitsignal verbessert werden. Dadurch werden Störsignale unterdrückt und die Nutzsignale herausgehoben.

Die Fig. 11b zeigt exemplarisch die Differenz als Zeitsignal Der Grundgedanke besteht darin, eine Bewertung der Formänderung durchführen. Dies kann durch Differenzbildung, Quotientenbildung, oder andere geeignete Methoden gemacht werden. Eine Veränderung der Amplitude der Differenz kann eine Aussage über eine Änderung der Eigenformen enthalten. Analog kann bei einer geeigneten Wahl der Stellen eine Frequenzauswertung erfolgen.

Eine weitere Analysemöglichkeit besteht darin, den Krümmungsradius des Rotorblatts an bestimmten Stellen zu analysieren. Hierzu zeigt die Fig. 12a einen Verlauf der Verformung entlang der Longitudinalkoordinate des einseitig eingespannten Balkens 28 mit dem Biegeradius R1. Die Fig. 12b zeigt einen ermittelten Verlauf der Verformung entlang der Longitudinalkoordinate des einseitig eingespannten Balkens 28 mit einer Schadstelle bei x0 und mit dem Biegeradius R2. Durch die Beschädigung bei x0 wird der Biegeradius verändert. Die Veränderung des Biegeradius wird ermittelt und dient als Indikator für eine Beschädigung des Rotorblatts an dieser Stelle.

Fig. 13 zeigt schematisch einen Verlauf 30 des Elastizitätsmoduls und den Verlauf 31 einer Resonanzfrequenz einer mechanischen Schwingung eines Rotorblatts als Funktion der Temperatur. Beide Verläufe sind bei einer Temperatur von -30°C auf einen Wert von 100% skaliert. Auf der Ordinatenachse sind Prozentwerte angegeben. Typischerweise sinkt das Elastizitätsmodul mit steigender Temperatur. Bei dem in Fig. 13 gezeigten Beispiel wurde vereinfachend ein linearer Abfall des Elastizitätsmoduls angenommen. Bei +35°C ist in diesem Beispiel das Elastizitätsmodul auf 67% des Wertes bei -30 °C abgesunken. Die Resonanzfrequenz ist näherungsweise proportional zur Wurzel des Elastizitätsmoduls. Dementsprechend ist die Abnahme der Resonanzfrequenz mit ansteigender Temperatur geringer als die Abnahme des Elastizitätsmoduls, was sich im flacheren Verlauf der Kurve 31 äußert, deren Wert bei +35°C immer noch 82% des Wertes bei -30°C liegt. Dennoch führt die temperaturabhängige Änderung des Elastizitätsmoduls zu entsprechenden Änderungen der Resonanzfrequenz. Auch unerwünschte, zu detektierende Effekte, wie etwa ein kleinerer Riss im Rotorblatt können gegebenenfalls nur geringen Einfluss auf die Resonanzfrequenzen haben, so dass diese Effekte unter Umständen kleiner sind, als eine temperaturbedingte Änderung.

Es ist sogar denkbar, dass sich temperaturbedingte und störungsbedingte Änderungen des gemessenen Schwingungsfrequenzspektrums gerade aufheben. Ist aber die Kennlinie, wie sie beispielhaft durch den Verlauf 31 repräsentiert wird, bekannt, kann unter Verwendung der von der Temperaturmesseinrichtung 17 gemessenen Temperatur der gemessene Wert einer Resonanzfrequenz auf eine Referenztemperatur, für welche die Referenzdaten gültig sind, normiert werden. Würde beispielsweise die Recheneinrichtung 18 über die angeschlossene Temperaturmesseinrichtung 17 eine Temperatur des Rotorblatts 14 von 35° feststellen und würden die Referenzdaten für eine Temperatur von 0°C gelten, so kann die Recheneinrichtung 18 anhand der abgespeicherten Kennlinie vor dem Vergleich mit den Referenzdaten den Wert einer Eigen- oder Resonanzfrequenz entsprechend höher setzen.

Würde bei dem in Fig. 13 gezeigten Beispiel die Resonanzfrequenz den angegebenen Prozentzahlen entsprechen, so müsste der Wert der Eigenfrequenz von den gemessenen 82 Hertz auf einen Wert von etwa 92 Hertz geändert werden. Anschließend kann dieser Wert dann von der Recheneinrichtung 18 mit den Referenzdaten verglichen werden. Ist beispielsweise ein Wert zwischen 91 und 93 Hertz als normal charakterisiert, so ergibt sich, dass der Zustand des Rotorblatts in Ordnung ist. Dieser Vergleich würde ohne die Temperaturkompensation demgegenüber zu einem falschen Ergebnis führen. Für reale Rotorblätter 14 können die temperaturbedingten Änderungen selbstverständlich von dem in Fig. 13 gezeigten Beispiels abweichen.

Die Kennlinie kann in Form einer Tabelle oder Liste in einem Speicher der Recheneinrichtung 18 abgelegt sein. Es gibt aber auch noch andere Möglichkeiten. Wird etwa die Kennlinie, beziehungsweise der in Fig. 13 beispielhaft dargestellte Verlauf 31 durch eine Gerade angenähert, kann die Kennlinie durch einen einfachen Faktor repräsentiert werden, der abgespeichert oder in das Auswerteprogramm einkompiliert ist.

<u>Bezugszeichenliste</u>

| | |
|---|---|
| 10 | Lichtquelle |
| 11 | Windkraftanlage |
| 12 | Markierung |
| 12.1 | erstes Markierungspaar |
| 12.2 | zweites Markierungspaar |
| 12.3 | Abbildung des ersten Markierungspaars auf die Sensorfläche |
| 12.4 | Abbildung des zweiten Markierungspaars auf die Sensorfläche |
| 12.5 | Markierung an Rotorblatt in Initialstellung |
| 12.6 | Markierung an Rotorblatt nach Verformung |
| 12.7 | Abbildung von Markierung an Rotorblatt in Initialstellung |
| 12.8 | Abbildung von Markierung an Rotorblatt nach Verformung |
| 14 | Rotorblatt |
| 15 | Rotornarbe |
| 16 | Sensor |
| 16.1 | optoelektronische Kamera |
| 16.2 | Bildverarbeitungseinrichtung |
| 16.3 | Sensorfläche |
| 17 | Temperaturmesseinrichtung |
| 18 | Recheneinrichtung |
| 20 | Blickwinkel |
| 20.1 | Feld in Schlagrichtung des Rotorblatts |
| 20.2 | Feld in Schwenkrichtung des Rotorblatts |
| 22 | Abbildungsoptik |
| 24 | Verformung |
| 26 | Verformungswinkel [Grad] |

28      einseitig eingespannter Balken

30      Verlauf eines Elastizitätsmoduls einer mechanischen Schwingung eines Rotorblatts als Funktion der Temperatur

31      Verlauf einer Resonanzfrequenz einer mechanischen Schwingung eines Rotorblatts als Funktion der Temperatur

A      Verformung des Rotorblatts

f      Frequenz der Eigenschwingung [Hz]

$f_0$      Grundfrequenz oder deren Harmonische der natürlichen Eigenschwingung des Rotorblatts

$f_1$      Grundfrequenz oder deren Harmonische der Eigenschwingung des beschädigten Rotorblatts

w      Verformung des Balkens in der lateralen Ebene

$W_2-W_1$      Differenz zwischen Auslenkungen, die aus den Positionsdaten von zwei Markierungen ermittelt sind

WK      Wavelet-Koeffizient

x      Longitudinalkoordinate [m]

$x_0$      Longitudinalkoordinate der Beschädigung [m]

$x_1$      Longitudinalkoordinate des ersten Markierungspaars [m]

$x_2$      Longitudinalkoordinate des zweiten Markierungspaars [m]

**Patentansprüche**

1. Verfahren zum Überwachen eines Rotorblatts (14) für eine Windkraftanlage (11) mittels einer Überwachungseinrichtung umfassend einen Sensor (16), zumindest eine von dem Sensor (16) erfassbare, an dem Rotorblatt (14) angeordnete Markierung (12, 12.1, 12.2) und eine mit dem Sensor (16) gekoppelte Recheneinrichtung (18), mit folgenden Schritten:

     - Erfassen der Markierung (12, 12.1, 12.2) durch den Sensor (16) zum Messen einer Position der Markierung (12, 12.1, 12.2) beim Verformen des Rotorblatts (14), so dass Positionsdaten der Markierung (12, 12.1, 12.2) durch den Sensor (16) bereitgestellt werden;
     - Ermitteln von Bewegungsdaten aus den gemessenen Positionsdaten durch die Recheneinrichtung (18), wobei die Bewegungsdaten zeitabhängige Eigenformen, Schwingungen, und/oder eine Zahl von Bewegungszyklen des Rotorblatts (14), sowie mittels einer Spektral-, Analyse und / oder Wavelet - Transformation der Schwingungen des Rotorblatts (14) ermittelte Spektralinformationen, insbesondere Eigenfrequenzen und/oder Schwingungsmodi, umfassen;
     - Bereitstellen von Referenzdaten aus Positionsdaten durch die Recheneinrichtung (18), wobei die Referenzdaten mittels einer Simulation oder einer Referenzmessung ermittelt wurden;
     - Ermitteln oder Prognostizieren eines Zustands des Rotorblatts (14) betreffend einen Grad der Materialermüdung, Vereisung, oder Beschädigung des Rotorblatts (14) durch die Recheneinrichtung (18) mittels einer Analyse der Bewegungsdaten umfassend eine regelbasierte Analyse oder einen Vergleich der Bewegungsdaten mit den Referenzdaten, zum Überwachen des Rotorblatts (14).

2. Verfahren nach Anspruch 1, **gekennzeichnet durch** mindestens eines der folgenden Merkmale:

     - der Zustand des Rotorblatts (14) wird **durch** ein Datenfeld charakterisiert, welche mindestens eine Zustandsgröße umfasst, wobei die mindestens eine Zustandsgröße den aufgrund von Verformungen und / oder Zahl von Verformungen erreichte Grad der Materialermüdung, Eisanlagerung oder Beschädigung des Rotorblatts (14) angibt, sowie Informationen über einen Schadensbereich betreffend den Ortsbereich in welchem eine Ermüdung, Überlastung oder Beschädigung des Ratorblatts (14) aufgetreten oder zu erwarten ist;
     - wobei die Zustandsgröße vorzugsweise eine linguistische Variable, beispielsweise "ermüdet", "vereist" oder "beschädigt", oder eine numerische Größe ist.

3. Verfahren gemäß einem der vorstehenden Ansprüche, **gekennzeichnet dadurch, dass** die Bewegungsdaten zu einer Klassifizierung der Windverhältnisse genutzt und/oder zum Überwachen des Rotorblatts (14) einer statistischen Auswertung zugeführt werden.

4. Verfahren gemäß einem der vorstehenden Ansprüche, **gekennzeichnet dadurch, dass** die Positionsdaten an einer Vielzahl aufeinanderfolgender Abtastzeitpunkte gemessen werden, wobei vorzugsweise zu jeweils einem Abtastzeitpunkt alle Markierungen (12, 12.1, 12.2) gleichzeitig abgetastet werden.

5. Verfahren gemäß einem der vorstehenden Ansprüche, **dadurch gekennzeichnet, dass** die Analyse der Bewegungsdaten zumindest eine der folgenden Analysen umfasst:

- eine Wavelet-Analyse der Verformung (A) des Rotorblatts (14) entlang einer Longitudinalkoordinate (x) des Rotorblatts (14);
- eine Wavelet Paket Transformation und Analyse;
- eine Mustererkennung in den Positionsdaten, einschließlich der Eigenformen, Biegeradien oder Eigenschwingungen des Objekts;
- eine Mustererkennung in den Spektralinformationen des Objekts, wobei die Spektralinformationen vorzugsweise mittels Spektralanalyse oder Wavelet-Transformation ermittelt werden;
- eine Analyse einer Zahl von Belastungszyklen in Kombination mit aus Positionsdaten ermittelten Materialspannungen, und/oder eine Wavelet Paket Transformation und/oder Wavelet-Transformation zur Ermittlung von stationären und nicht-stationären Charakteristika.

6. Verfahren gemäß einem der vorstehenden Ansprüche, **gekennzeichnet durch** mindestens eines der folgenden Merkmale:

- die für die Wavelet-Analyse benötigte Verformung entlang der Longitudinalkoordinate (x) des Rotorblatts (14) wird **dadurch** ermittelt, dass die Schritte

a) Aufbringen einer Kraft auf das Rotorblatt (14) an einem Ansatzpunkt,
b) Messen der resultierende Verformung (A) des Rotorblatts (14) und c) sukzessives Wiederholen der genannten Schritte für weitere Ansatzpunkte entlang der Longitudinalkoordinate (x), ausgeführt oder simuliert werden, wobei anschließend die gemessene oder simulierte Verformung entlang der Longitudinalkoordinate (x) einer Wavelet-Transformation unterzogen wird und aus dem daraus erhaltenen örtlichen Verlauf eines oder mehrerer Wavelet-Koeffizienten eine Lokalisierung eines Schadens ermittelt wird;

- die Spektralinformation wird mittels einer Spektral-Transformation, Wavelet-Transformation, oder Wavelet-Paket-Transformation ermittelt;
- die Mustererkennung in den Positionsdaten wird **durch** einen Vergleich von Mustern, die auf Positionsdaten basieren, mit Mustern, die auf Referenzdaten oder Solldaten basieren, durchgeführt;
- die Mustererkennung in den Spektralinformationen wird **durch** einen Vergleich von spektralen Mustern, die aus gemessenen Positionsdaten berechnet sind, mit spektralen Mustern, die aus Referenzdaten berechnet sind, durchgeführt;
- die Ergebnisse einer Wavelet-Paket-Transformation, und/oder die "Komponenten Energie" und/oder der "Energy Rate Index" werden als Eingangsgrößen für eine Mustererkennung oder als Indikatoren verwendet;
- die Mustererkennung wird mittels eines Vergleichs eines Indikators mit einem, vorzugsweise mit Methoden der statistischen Prozesskontrolle ermittelten, Schwellwert, durchgeführt;
- die Mustererkennung wird mittels eines adaptiven Systems, vorzugsweise eines künstlichen neuronalen Netzes, oder mittels eines Klassifikators mit starren oder Fuzzy Regeln, oder mittels eines wissensbasierten Systems, durchgeführt.

7. Verfahren gemäß einem der vorstehenden Ansprüche, **gekennzeichnet durch** mindestens eines der folgenden Merkmale:

- die Referenzdaten werden mittels eines Bewegungsmodells für das Rotorblatt (14) ermittelt;
- die Referenzdaten werden aus einer Datenbasis bereitgestellt, die Positionsdaten aus zuvor durchgeführten Referenzmessungen umfasst;
- gemessene Positionsdaten werden, zu ausgewählten Abtastzeitpunkten oder zu jedem Abtastzeitpunkt, zur Ermittlung der Referenzdaten an das Bewegungsmodell übertragen;
- als Bewegungsmodell wird eine Bewegungssimulation mit einem Finite-Elemente-Modell verwendet;
- als Bewegungsmodell wird ein mathematisches Modell, beispielsweise eine Differentialgleichung eines schwingenden Balkens (28), oder ein Simulationsmodell verwendet;
- die Positionsdaten werden, vorzugsweise mittels eines adaptiven Filters, zur Beseitigung von Störsignalen und/oder Rauschen gefiltert.

8. Verfahren gemäß einem der vorstehenden Ansprüche, **dadurch gekennzeichnet, dass** mittels einer Temperaturmesseinrichtung (17) die Temperatur des Rotorblattes (14) ermittelt und von der Recheneinrichtung (18) die Spektralinformation oder die Referenzdaten in Abhängigkeit von der gemessenen Temperatur anhand einer Kennlinie verändert werden und ein Vergleich der Bewegungsdaten mit den Referenzdaten mit den veränderten Daten erfolgt.

9. Einrichtung zum Überwachen eines Rotorblatts (14) für eine Windkraftanlage (11), mit

- einem Sensor (16),
- zumindest einer von dem Sensor (16) erfassbaren, an dem Rotorblatt (14) angeordneten Markierung (12, 12.1, 12.2) und
- einer mit dem Sensor (16) gekoppelten Recheneinrichtung (18), wobei
- der Sensor (16) dazu ausgebildet ist, die Markierung (12) zu erfassen, vorzugsweise mittels Abbilden auf eine Sensorfläche (16.3), zum Messen einer Position der Markierung (12, 12.1, 12.2) beim Verformen des Rotorblatts (14) und Bereitstellen von Positionsdaten der Markierung (12, 12.1, 12.2), und
- die Recheneinrichtung (18) dazu ausgebildet ist, aus den gemessenen Positionsdaten Bewegungsdaten umfassend zeitabhängige Eigenformen und / oder Schwingungen und/oder Spektralinformationen des Ratorblatts (14) zu ermitteln, Referenzdaten bereitzustellen, und einen Zustand des Rotorblatt (14) betreffend einen Grad der Materialermüdung oder Beschädigung des Rotorblatts (14) mittels einer Analyse der Bewegungsdaten umfassend eine regelbasierte Analyse oder einen Vergleich der Bewegungsdaten mit den Referenzdaten zu ermitteln oder prognostizieren.

10. Einrichtung gemäß dem vorstehenden Anspruch, **gekennzeichnet durch** mindestens eines der folgenden Merkmale:

- der Sensor (16) umfasst eine optoelektrische Kamera (16.1) und eine Bildverarbeitungseinrichtung (16.2), wobei die Bildverarbeitungseinrichtung (16.2) dazu ausgebildet ist, eine Position der Markierung (12, 12.1, 12.2) mittels Bilderkennung zu ermitteln;
- der Sensor (16) ist als Matrix-Sensor, vorzugsweise als CCD-Sensor, ausgebildet;
- der Sensor (16) ist an einer von den Positionen der Markierungen (12, 12.1, 12.2) longitudinal beabstandeten Position angeordnet;
- der Sensor (16) ist dazu ausgebildet, eine Biegung und/oder eine Torsion des Rotorblatts (14) zu erfassen;
- die Einrichtung umfasst eine Vielzahl von Sensoren (16), beispielsweise mehr als 2, oder 5, oder 10, oder 20, oder 50 Sensoren, die zueinander beabstandet an dem Rotorblatt (14) angeordnet sind.

11. Einrichtung gemäß einem der vorstehenden zwei Ansprüche, **gekennzeichnet durch** mindestens eines der folgenden Merkmale:

- die Einrichtung umfasst mindestens eine Lichtquelle (10);
- die Markierung (12, 12.1, 12.2) umfasst optische Reflexionsmittel, so dass der Sensor (16) die Markierung (12, 12.1, 12.2) erfassen kann indem Licht **durch** die Markierung (12, 12.1, 12.2) an den Sensor (16) reflektiert oder zurückgestreut wird;
- die Markierung (12, 12.1, 12.2) umfasst mindestens ein optisches Leuchtmittel, beispielsweise eine Fotodiode, welches Licht in Richtung des Sensors (16) abstrahlt, so dass der Sensor (16) die Markierung (12, 12.1, 12.2) erfassen kann;
- an dem Rotorblatt (14) ist eine Vielzahl von Markierungen (12, 12.1, 12.2) angeordnet, beispielsweise zumindest zwei, oder fünf, oder zehn, oder zwanzig oder hundert Markierungen (12, 12.1, 12.2);
- die Markierungen (12, 12.1, 12.2) sind entlang einer Longitudinalkoordinate (x) des Rotorblatts (14) an Positionen mit jeweils einem Longitudinalabstand zu einem Nullpunkt der Longitudinalkoordinate (x) angeordnet, und zu jedem Longitudinalabstand sind eine oder mehrere Markierungen (12, 12.1, 12.2) nebeneinander, an Positionen entlang einer Lateralkoordinate mit jeweils einem Lateralabstand zu einem Nullpunkt der Lateralkoordinate, angeordnet;
- die Markierung (12, 12.1, 12.2) ist innerhalb eines Hohlraumes des Rotorblatts (14) angeordnet.

12. Einrichtung gemäß einem der vorstehenden drei Ansprüche, **dadurch gekennzeichnet dass** die Markierung (12, 12.1, 12.2) einen Code umfasst, in welchem eine eindeutige Kennzeichnung der Markierung (12, 12.1, 12.2), zum Ermitteln einer Initialposition der Markierung (12, 12.1, 12.2), codiert ist, wobei die Recheneinrichtung (18) dazu eingerichtet ist, den Code zu decodieren und damit die Kennzeichnung zu ermitteln wobei eine Zuordnungstabelle von vorzugsweise dreidimensionalen Koordinaten in der Recheneinrichtung (18) zu Kennzeichnungen abgelegt ist.

13. Einrichtung gemäß einem der vier vorstehenden Ansprüche, **gekennzeichnet durch** eine an die Recheneinrichtung angeschlossene Temperaturmesseinrichtung (17), mittels welcher die Temperatur des Rotorblatts (14) ermittelbar ist, wobei die Recheneinrichtung (18) eingerichtet ist, die Spektralinformation oder die Referenzdaten in Abhängigkeit von der gemessenen Temperatur anhand einer Kennlinie zu verändern und den Vergleich der Bewegungsdaten mit den Referenzdaten anhand der veränderten Daten durchzuführen.

**14.** Einrichtung gemäß einem der fünf vorstehenden Ansprüche, **dadurch gekennzeichnet, dass** der Sensor (16) in der Rotornabe (15) oder im Rotorblatt (14) angeordnet ist.

EP 2 511 524 A1

Fig. 1a

16

Fig. 1b

Fig. 2

Fig. 3

Fig. 4

Fig. 5

Fig. 6

Fig. 7

Fig. 8

Fig. 9

Fig. 10a

Fig. 10b

Fig. 11a

Fig. 11b

Fig. 12a          Fig. 12b

Fig. 13

Europäisches
Patentamt

European
Patent Office

Office européen
des brevets

Nummer der Anmeldung

EP 11 00 3035

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/143849 A2 (VESTAS WIND SYSTEM AS [DK]; OLESEN IB SVEND [DK]; ABDALLAH IMAD [DK] V) 3. Dezember 2009 (2009-12-03) * Seite 2, Zeile 20 - Seite 12, Zeile 12 * * Seite 20, Zeile 7 - Seite 21, Zeile 24 * ----- | 1-14 | INV. F03D11/00 |
| X | WO 2010/061290 A2 (VESTAS WIND SYS AS [DK]; LI XIAO QIAN [SG]) 3. Juni 2010 (2010-06-03) * Seite 1, Zeile 25 - Seite 3, Zeile 8 * * Seite 4, Zeile 15 - Seite 5, Zeile 11 * * Seite 6, Zeilen 9-20 * ----- | 1-7, 9-12,14 | |
| X | WO 2010/089139 A1 (BAUMER INNOTEC AG [CH]; FURRER BERNHARDT [CH]; IHLEFELD JOACHIM [DE];) 12. August 2010 (2010-08-12) * Seite 3, Zeile 30 - Seite 21, Zeile 25 * ----- | 1-7, 9-12,14 | |
| A | TSAI C S ET AL: "Detection of wind turbine blades damage by spectrum-recognition using gaussian wavelet-entropy", ANTI-COUNTERFEITING, SECURITY, AND IDENTIFICATION IN COMMUNICATION, 2009. ASID 2009. 3RD INTERNATIONAL CONFERENCE ON, IEEE, PISCATAWAY, NJ, USA, 20. August 2009 (2009-08-20), Seiten 108-113, XP031539767, ISBN: 978-1-4244-3883-9 * das ganze Dokument * ----- -/-- | 1-14 | RECHERCHIERTE SACHGEBIETE (IPC) F03D |

Der vorliegende Recherchenbericht wurde für alle Patentansprüche erstellt

| Recherchenort | Abschlußdatum der Recherche | Prüfer |
|---|---|---|
| Den Haag | 15. September 2011 | Libeaut, Laurent |

EP 2 511 524 A1

**Europäisches Patentamt**
**European Patent Office**
**Office européen des brevets**

# EUROPÄISCHER RECHERCHENBERICHT

Nummer der Anmeldung

EP 11 00 3035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHIQIANG WANG ET AL: "Damage Diagnosis for Wind Turbine Blades Based on the Shifting Distance of Characteristic Frequency", IMAGE AND SIGNAL PROCESSING, 2009. CISP '09. 2ND INTERNATIONAL CONGRESS ON, IEEE, PISCATAWAY, NJ, USA, 17. Oktober 2009 (2009-10-17), Seiten 1-3, XP031555408, ISBN: 978-1-4244-4129-7 * das ganze Dokument *<br>----- | 1-14 | |
| A | WENGANG SHI ET AL: "Research on Operation Condition Classification Method for Vibration Monitoring of Wind Turbine", POWER AND ENERGY ENGINEERING CONFERENCE (APPEEC), 2010 ASIA-PACIFIC, IEEE, PISCATAWAY, NJ, USA, 28. März 2010 (2010-03-28), Seiten 1-6, XP031658891, ISBN: 978-1-4244-4812-8 * das ganze Dokument *<br>----- | 1-14 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 15. September 2011 | Libeaut, Laurent |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

25

**ANHANG ZUM EUROPÄISCHEN RECHERCHENBERICHT**
**ÜBER DIE EUROPÄISCHE PATENTANMELDUNG NR.**

EP 11 00 3035

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2011

| Im Recherchenbericht angeführtes Patentdokument | Datum der Veröffentlichung | Mitglied(er) der Patentfamilie | Datum der Veröffentlichung |
|---|---|---|---|
| WO 2009143849 A2 | 03-12-2009 | CN 102046968 A<br>EP 2300710 A2<br>US 2011103933 A1 | 04-05-2011<br>30-03-2011<br>05-05-2011 |
| WO 2010061290 A2 | 03-06-2010 | GB 2465790 A | 02-06-2010 |
| WO 2010089139 A1 | 12-08-2010 | DE 102009007938 A1 | 19-08-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006002708 B4